# EUROPEAN PATENT SPECIFICATION

(11) **EP 2 631 982 B1**
(45) Date of publication and mention of the grant of the patent: **03.08.2016**
(21) Application number: 11834165.0
(22) Date of filing: 27.09.2011
(51) Int. Cl.: H01B 1/12, H01B 1/22, H01M 10/054, H01M 10/0568, H01M 10/0569

(54) **USE OF AN ELECTROLYTE CONTAINING AN ALUMINUM SALT AND A SULFONE COMPOUND IN A SECONDARY BATTERY**
VERWENDUNG EINES ELEKTROLYTEN ENTHALTEND EIN ALUMINIUMSALZ UND EINE SULFONVERBINDUNG IN EINER SEKUNDÄRBATTERIE
UTILISATION D'UN ÉLECTROLYTE CONTENANT UN SEL D'ALUMINIUM ET UN COMPOSÉ SULFONE DANS UNE BATTERIE SECONDAIRE

(30) Priority: 21.10.2010 JP 2010236563
(43) Date of publication of application: 28.08.2013
(73) Proprietor: Sony Corporation, Tokyo 108-0075 (JP)
(72) Inventor: NAKAYAMA, Yuri, Tokyo 108-0075 (JP); TAKESHI, Kazumasa, Tokyo 108-0075 (JP); SENDA, Yui, Tokyo 108-0075 (JP); MORIOKA, Hiroyuki, Tokyo 108-0075 (JP)
(74) Representative: Müller Hoffmann & Partner
(86) International application number: PCT/JP2011/072013
(87) International publication number: WO 2012/053325

(56) References cited:
- JP-A- 3 238 769
- JP-A- 9 120 816
- JP-A- H0 652 898
- JP-A- H06 293 991
- JP-A- H09 259 892
- JP-A- 2003 100 347
- JP-A- 2003 297 423
- JP-A- 2004 311 442
- JP-A- 2004 327 445
- JP-A- 2010 257 704

## Description

### TECHNICAL FIELD

The present invention relates to the use of an electrolyte containing an aluminum salt and a solvent.

### BACKGROUND ART

In recent years, small electronic apparatuses represented by a mobile terminal have been widely used, and it has been demanded to further reduce the size and the weight of the small electronic apparatuses and to achieve their long life. Accordingly, as an electric power source for the small electronic apparatuses, a battery, in particular, a small and light-weight secondary battery capable of providing high energy density has been developed. In these days, it has been considered to apply such a secondary battery to large electronic apparatuses represented by an automobile in addition to the foregoing small electronic apparatuses.

As the secondary battery, secondary batteries utilizing various charge and discharge principles have been proposed. Specially, an aluminum secondary battery utilizing a precipitation-dissolution reaction of aluminum has attracted attentions. One reason for this is that, aluminum has a high ionization tendency, and therefore, the electric charge per unit volume obtained by an oxidation-reduction reaction is high. That is, aluminum is a greatly prospective material as a material for forming an electrode or as an electronic charge carrier.

The aluminum secondary battery includes a cathode, an anode, and an electrolyte containing an aluminum salt and a solvent. The composition of the electrolyte functioning as a medium for a charge and discharge reaction largely affects performance of the battery. Therefore, various studies have been made on the composition of the electrolyte.

Specifically, to achieve high capacity and long life, an alkyl sulfone such as dimethyl sulfone is used (for example, see PLT 1). In this case, as a solvent, an organic solvent such as a cyclic ester carbonate, a chain ester carbonate, a cyclic ether, and a chain ether is used.

Further, to reduce polarization at the time of discharge, an organic halide such as trimethylphenyl ammonium chloride is used together with an aluminum salt such as aluminum chloride (for example, see PLTs 2 and 3). In this case, as a solvent, an organic solvent such as 1,2-dichlorobenzene is used.

### [Citation List]

### [Patent Literatures]

[PLT 1]: Japanese Unexamined Patent Application Publication No. 2003-100347
[PLT 2]: Japanese Unexamined Patent Application Publication No. H06-293991
[PLT 3]: Japanese Unexamined Patent Application Publication No. H09-259892

JP H06 52898 A relates to an aluminum secondary battery wherein the electrolyte contains ethylene carbonate and dimethyl carbonate.

JP 3 238769 A discloses that a heterocyclic compound having two or more nitrogen atoms are added to an electrolyte to prevent short circuit.

JP 9 120816 A relates to an aluminum non-aqueous electrolyte secondary battery wherein the electrolyte is composed a non-aqueous solvent, an aluminum halide and organic halide.

JP 2010 257704 A, which is an intermediate document originating from the same applicant, discloses an electrolyte comprising an aluminum salt, an alkyl sulfone of formula R¹-S(=O)₂-R² (with R and R² representing alkyl groups), and an aromatic hydrocarbon solvent having a relative permittivity (or dielectric constant) of 20 or less.

### SUMMARY OF INVENTION

To achieve the practical use of the aluminum secondary battery, it is necessary to smoothly and sufficiently progress a precipitation-dissolution reaction of aluminum even at comparatively low temperature (such as ambient temperature). However, in the existing aluminum secondary batteries, the precipitation-dissolution reaction of aluminum smoothly and sufficiently progresses only at comparatively high temperature (such as temperature equal to or higher than 50 deg C), and the reaction efficiency is low. Therefore, in terms of practicality, there is room for improvement.

In view of the foregoing disadvantage, it is an object of the present invention to provide an electrolyte to be used for decreasing progression temperature of a precipitation-dissolution reaction of aluminum to below 50°C.

The electrolyte used according to the present invention includes an aluminum salt, an alkyl sulfone (R1-S(=O)₂-R2: each of R1 and R2 represents an alkyl group), and a solvent having a specific dielectric constant of 20 or less. A content of the solvent is equal to or larger than 30 mol% and is less than 88 mol%, and a mol ratio between the aluminum salt and the alkyl sulfone (a content of the aluminum salt/a content of the alkyl sulfone) is equal to or larger than 4/5 and is less than 7/3. Further, a secondary battery according to an embodiment of the present invention includes a cathode, an anode, and an electrolyte, the electrolyte having the foregoing composition. It is to be noted that a value of the specific dielectric constant is a measurement value at 25 deg C.

The electrolyte used according to the present invention includes the alkyl sulfone and the solvent (having a specific dielectric constant of 20 or less) together with the aluminum salt. The content of the solvent and the mol ratio (the content of the aluminum salt/the content of the alkyl sulfone) satisfy the foregoing conditions. In this case, since the dispersion amount of the aluminum salt with respect to the solvent is increased compared to in a case in which the content of the solvent and the mol ratio do not satisfy the foregoing conditions, a dimer of the aluminum salt is easier to be generated. Therefore, since an oxidation-reduction reaction of aluminum becomes easier to be progressed, progression temperature of a precipitation-dissolution reaction of aluminum is allowed to be lowered. Thereby, according to the secondary battery using the electrolyte of the embodiment of the present invention, aluminum is electrochemically and effectively precipitated and dissolved even at temperature that is not high. Accordingly, battery capacity is allowed to be stably obtained at ambient temperature by the precipitation-dissolution reaction of aluminum.

### BRIEF DESCRIPTION OF THE DRAWINGS

[FIG. 1] FIG. 1 is a triangle phase diagram illustrating compositions of an electrolyte used according to the present invention.
[FIG. 2] FIG. 2 is a cross-sectional view illustrating a configuration of an electrochemical device including the electrolyte used according to the present invention.

### MODE(S) FOR CARRYING OUT THE INVENTION

An embodiment of the present invention will be hereinafter described in detail with reference to the drawings. The description will be given in the following order.
1. Electrolyte
2. Electrochemical Device Using Electrolyte

### [1. Electrolyte]

The electrolyte used according to the present invention is intended, for example, for use in an electrochemical device such as an aluminum secondary battery. The electrolyte contains an alkyl sulfone and a solvent together with an aluminum salt. The aluminum salt and the alkyl sulfone are dispersed (or dissolved) in the solvent. However, the electrolyte may contain a material other than the foregoing materials.

### [Aluminum Salt]

The aluminum salt includes one or more of aluminum salts having various anions described below.

The aluminum salt contains an anion (negative ion) together with an aluminum ion (Al³⁺) as a cation (positive ion). Examples of the anion include a fluoride ion (F⁻), a chloride ion (Cl⁻), an iodide ion (I⁻), a bromide ion (Br⁻), a perchlorate ion (ClO₄⁻), a tetrafluoroboric acid ion (BF₄⁻), a hexafluorophosphoric acid ion (PF₆⁻), a hexafluoroarsenic acid ion (AsF₆⁻), a perfluoroalkyl sulfonic acid ion (RfSO₃⁻: Rf represents a perfluoroalkyl group), and a perfluoroalkyl sulfonyl imide ion ((RfSO₂)₂N⁻). However, the anion may be an ion other than the foregoing ions.

The aluminum salt may be a complex salt. In this case, examples of the cation include [Al(CH₃CN)₆]³⁺ in which acetonitrile is coordinated with an aluminum ion and [Al(DMSO)₆]³⁺ in which dimethylsulfoxide ((DMSO: (CH₃)₂SO) is coordinated with an aluminum ion. However, the cation in the complex salt may be an ion other than the foregoing ions.

Specific examples of the aluminum salt include halogenated aluminum (AlX₃: X represents one of chlorine (Cl), bromine (Br), and iodine (I).). One reason for this is that the halogenated aluminum is generally available, and an oxidation-reduction reaction of aluminum is thereby easily progressed.

### [Alkyl Sulfone]

The alkyl sulfone includes one or more of chain compounds represented by R1-S(=O)₂-R2. Each of R1 and R2 represents an alkyl group, and R1 and R2 may be the same type of group or may be different from each other.

The electrolyte contains the alkyl sulfone for the following two reasons. First, in this case, since the aluminum salt is easily solvated, aluminum is electrochemically activated. Thereby, an oxidation-reduction reaction of aluminum is easily progressed. Secondly, in this case, since the oxidizing characteristics of the electrolyte (characteristics of oxidizing a substance other than the electrolyte) is suppressed, the reactivity thereof is reduced. Thereby, in the case where the electrolyte is used together with a metal material in an electrochemical device, the metal material is less likely to be corroded. Examples of the metal material include a metal package member, a metal electrode, and a metal lead.

Though types (carbon number and combination) of R1 and R2 are not particularly limited, each carbon number is preferably equal to or less than 4, since superior solubility and superior compatibility are thereby obtained. In this case, examples of each of R1 and R2 include a methyl group, an ethyl group, an n-propyl group, an i-propyl group, an n-butyl group, an i-butyl group, an s-butyl group, and a t-butyl group. In particular, the sum of the carbon number of R1 and the carbon number of R2 is preferably from 4 to 7 both inclusive, since thereby, a higher effect is obtainable.

Specific examples of the alkyl sulfone include dimethyl sulfone, methylethyl sulfone, methyl-n-propyl sulfone, methyl-i-propyl sulfone, methyl-n-butyl sulfone, methyl-i-butyl sulfone, methyl-s-butyl sulfone, methyl-t-butyl sulfone, diethyl sulfone, ethyl-n-propyl sulfone, ethyl-i-propyl sulfone, ethyl-n-butyl sulfone, ethyl-i-butyl sulfone, ethyl-s-butyl sulfone, ethyl-t-butyl sulfone, di-n-propyl sulfone, di-i-propyl sulfone, n-propyl-n-butyl sulfone, and di-n-butyl sulfone, since these compounds are generally available, and easily exercise the foregoing advantageous function of the alkyl sulfone. It goes without saying that the alkyl sulfone may be a compound other than the foregoing compounds as long as the compound has the structure represented by R1-S(=O)₂-R2.

### [Solvent]

Examples of the solvent include one or more of nonaqueous solvents having a specific dielectric constant of 20 or less (hereinafter referred to as "low polarity solvents"). Such nonaqueous solvents are less likely to affect the solvation of an aluminum salt. Therefore, in the case of using one or more of such nonaqueous solvents, while inhibition of the solvation of the aluminum salt is suppressed, the aluminum salt and the alkyl sulfone are dispersed in the solvent. Further, since the viscosity of the electrolyte is lowered, the aluminum salt and the alkyl sulfone are easily dispersed. However, the solvent may further contain a solvent other than the low polarity solvent.

The low polarity solvent is a solvent having low dielectric characteristics and low protogenic characteristics (low electron releasing characteristics). However, a value of the specific dielectric constant is a measurement value at 25 deg C.

In the case where the specific dielectric constant is within the foregoing range, the type of the low polarity solvent is not particularly limited. Examples of the low polarity solvent include organic solvents such as an aromatic hydrocarbon, ether, ketone, ester acetate, a chain ester carbonate, and a halide of each thereof. The aromatic hydrocarbon is an aromatic ring or a compound obtained by introducing a hydrocarbon group to an aromatic ring. Examples of the aromatic hydrocarbon include benzene, toluene, ethylbenzene, o-xylene, m-xylene, p-xylene, and 1-methyl naphthalene. Examples of the ether include diethyl ether and tetrahydrofuran. Examples of the ketone include 4-methyl-2-pentanone. Examples of the ester acetate include methyl acetate and ethyl acetate. Examples of the chain ester carbonate include dimethyl carbonate, diethyl carbonate, and ethylmethyl carbonate. The halide is obtained by substituting each of part or all of hydrogen groups in each of the foregoing aromatic hydrocarbon and the like by a halogen. Examples of the halide include a fluorinated compound. In addition thereto, other type of ester and/or the like may be used.

Specially, the low polarity solvent preferably dissolves the aluminum salt and the alkyl sulfone sufficiently. One reason for this is that, in this case, since the aluminum salt and the alkyl sulfone are uniformly dispersed, a higher effect is obtainable. It is to be noted that, in the case where the solubility is evaluated, for example, the solubility is examined by mixing the aluminum salt, the alkyl sulfone, and the low polarity solvent at a mixture ratio (weight ratio) of 10:60:30.

Further, the specific dielectric constant is preferably equal to or less than 10, and is more preferably equal to or less than 2.4. One reason for this is that, in this case, the foregoing advantageous function of the low polarity solvent is easily exercised. Examples of the low polarity solvent having a specific dielectric constant equal to or less than 10 include an aromatic hydrocarbon and a chain ester carbonate. Examples of the low polarity solvent having a specific dielectric constant equal to or less than 2.4 include an aromatic hydrocarbon.

### [Contents of Aluminum Salt, Alkyl Sulfone, and Low Polarity Solvent]

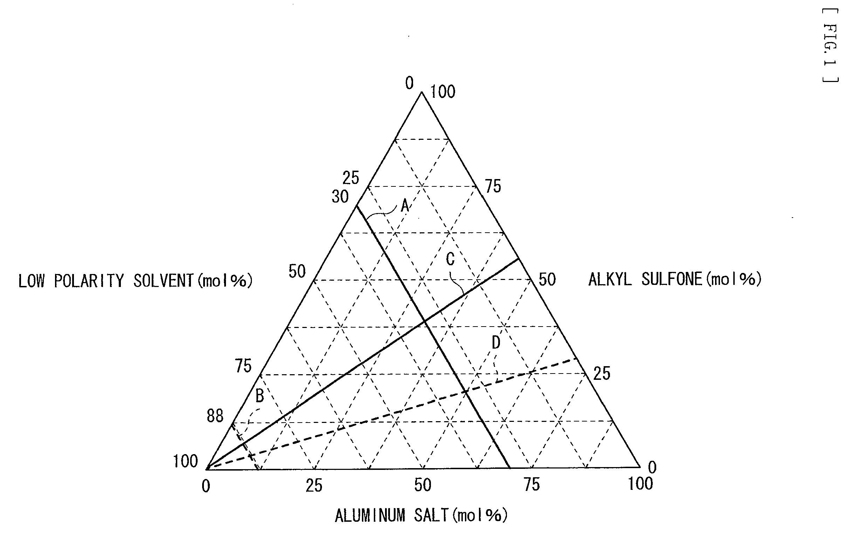

FIG. 1 illustrates a triangle phase diagram of compositions of the electrolyte. In FIG. 1, a full line A is a line indicating a case that the content of the low polarity solvent is 30 mol%, a dashed line B is a line indicating a case that the content of the low polarity solvent is 88 mol%, a full line C is a line indicating a case that the mol ratio (the content of the aluminum salt/the content of the alkyl sulfone) is 4/5, and a dashed line D is a line indicating a case that the mol ratio is 7/3.

The content of the low polarity solvent in the electrolyte is equal to or larger than 30 mol% and is less than 88 mol%, and is more preferably from 30 mol% to 84 mol% both inclusive. One reason for this is that, in this case, the content of the low polarity solvent becomes appropriate, and therefore, the dispersion amount of the aluminum salt with respect to the low polarity solvent is increased.

Further, the mixture ratio between the content (mol%) of the aluminum salt and the content (mol%) of the alkyl sulfone is equal to or larger than 4/5 and is less than 7/3, and is more preferably from 4/5 to 5/3 both inclusive at a mol ratio (the content of the aluminum salt/the content of the alkyl sulfone). One reason for this is that, in the case where the low polarity solvent satisfies the foregoing conditions, the mixture ratio between the aluminum salt and the alkyl sulfone becomes appropriate, and therefore, the dispersion amount of the aluminum salt with respect to the low polarity solvent is further increased.

Accordingly, a range of electrolyte composition, that is, a range within which the respective contents of the aluminum salt, the alkyl sulfone, and the low polarity solvent fall is the range surrounded by the full lines A and C and the dashed lines B and D in FIG. 1. However, as seen in the foregoing conditions, while dots (contents) on the full lines A and C are included in the range, dots (contents) on the dashed lines B and D are not included in the range.

### [Method of Forming Electrolyte]

In forming the electrolyte, the aluminum salt, the alkyl sulfone, and the low polarity solvent are mixed to disperse the aluminum salt and the alkyl sulfone in the low polarity solvent. In this case, though mixing order thereof is not particularly limited, specially, the aluminum salt is preferably dispersed after the low polarity solvent and the alkyl sulfone are mixed. One reason for this is that, in this case, generation of reaction heat is suppressed, and the dispersion amount of the aluminum salt tends to be further increased. In the case where the dispersion amount of the aluminum salt is increased, the content of the aluminum salt in the electrolyte is increased, and therefore, a dimer of the aluminum salt is easily generated. Thereby, even if temperature of the electrolyte is not increased, an oxidation-reduction reaction of the aluminum salt is easily and significantly progressed.

### [Function and Effect of Electrolyte]

The electrolyte contains the alkyl sulfone and the low polarity solvent together with the aluminum salt. The content of the low polarity solvent is equal to or larger than 30 mol% and is less than 88 mol%. The mol ratio (the content of the aluminum salt/the content of the alkyl sulfone) is equal to or larger than 4/5 and is less than 7/3.

In this case, aluminum is electrochemically activated by the alkyl sulfone, and an oxidation-reduction reaction of aluminum is less likely to be influenced by the low polarity solvent. Therefore, the oxidation-reduction reaction of aluminum becomes easier to be progressed smoothly and sufficiently. Further, in this case, a dimer of the aluminum salt is more easily generated according to increase of the dispersion amount with respect to the low polarity solvent compared to a case in which the content of the low polarity solvent and the mol ratio do not satisfy the foregoing conditions. Therefore, the oxidation-reduction reaction of aluminum becomes easier to be progressed.

Accordingly, since the oxidation-reduction reaction of aluminum becomes significantly easier to be progressed, progression temperature of a precipitation-dissolution reaction of aluminum is allowed to be lowered. That is, even if temperature of the electrolyte is not excessively increased, the precipitation-dissolution reaction of aluminum is allowed to be progressed smoothly and sufficiently at ambient temperature. Specifically, the favorable precipitation-dissolution reaction of aluminum is allowed to be achieved at 15 deg C or more, preferably at 20 deg C or more, and more preferably at 25 deg C or more. In this case, further, reactivity of the electrolyte is suppressed by the alkyl sulfone, and therefore, corrosion of the metal material by the electrolyte is allowed to be suppressed.

In particular, in the case where the low polarity solvent is an aromatic hydrocarbon such as toluene, a higher effect is obtainable. In addition thereto, in the case where each of carbon numbers of R1 and R2 in the alkyl sulfone is equal to or less than 4, or the alkyl sulfone is ethyl-n-propyl sulfone, etc., a higher effect is obtainable.

### [2. Electrochemical Device Using Electrolyte]

Next, a description will be given of a usage example of the foregoing electrolyte. A secondary battery will be herein taken as an example of electrochemical devices. The electrolyte is used for the secondary battery as follows.

### [Configuration of Secondary Battery]

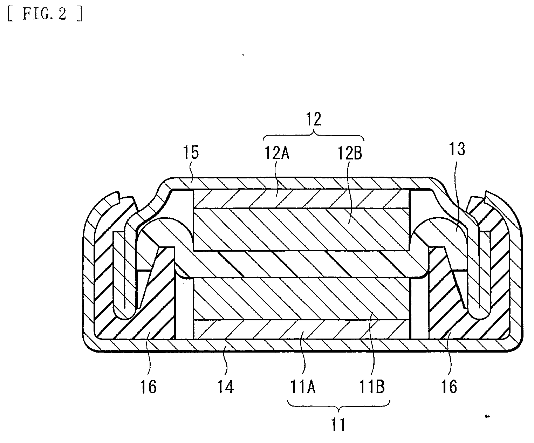

FIG. 2 illustrates a cross-sectional configuration of a secondary battery. The secondary battery herein described is an aluminum secondary battery in which capacity is obtained by a precipitation-dissolution reaction of aluminum at the time of charge and discharge.

In the secondary battery, an outer package can 14 containing a cathode 11 and an outer package cup 15 containing an anode 12 are swaged with a separator 13 and a gasket 16.

The outer package can 14 and the outer package cup 15 are package members to contain the cathode 11, the anode 12, and the like. For example, the outer package can 14 and the outer package cup 15 are made of a metal material such as aluminum, an aluminum alloy, and stainless steel.

In the cathode 11, a cathode active material layer 11B is formed on one surface of a cathode current collector 11 A. The cathode current collector 11A may be made of, for example, aluminum, nickel (Ni), stainless steel, or the like. The cathode active material layer 11B contains other material such as a cathode binder and a cathode electric conductor as necessary together with a cathode active material. Examples of the cathode active material include a disulfide such as titanium disulfide and molybdenum sulfide. Examples of the cathode binder include a polymer material such as polyvinylidene fluoride and polytetrafluoroethylene. Examples of the cathode electric conductor include graphite, carbon black, acetylene black, and Ketjen black.

In the anode 12, an anode active material layer 12B is formed on one surface of an anode current collector 12A. The anode current collector 12A may be made of, for example, copper (Cu), nickel, stainless steel, or the like. The anode active material layer 12B may be made of aluminum or an aluminum alloy. Examples of elements configuring the aluminum alloy include one or more of silicon (Si), manganese (Mn), chromium (Cr), nickel, and copper.

The separator 13 separates the cathode 11 from the anode 12, and passes aluminum ions while preventing current short circuit resulting from contact of both electrodes. The separator 13 is formed of, for example, a porous film made of a synthetic resin, ceramics, or the like. Examples of the synthetic resin include polytetrafluoroethylene, polypropylene, and polyethylene. The separator 13 may be a laminated film in which two or more types of porous films are laminated. The separator 13 is impregnated with the foregoing electrolyte. The electrolyte is what we call an electrolytic solution (liquid electrolyte).

### [Operation of secondary Battery]

In the secondary battery, for example, a charge and discharge reaction is generated as follows. At the time of charge, due to a reduction reaction, aluminum ions extracted from the cathode 11 reach the anode 12 through the electrolyte, and therefore, aluminum is precipitated in the anode 12. In contrast, at the time of discharge, due to an oxidation reaction, aluminum is dissolved in the anode 12, and therefore, aluminum ions are eluted from the anode 12 into the electrolyte.

### [Method of Manufacturing Secondary Battery]

The secondary battery is manufactured, for example, by the following procedure. First, the cathode active material layer 11B containing a cathode active material is formed on one surface of the cathode current collector 11A by using a coating method or the like to form the cathode 11. Subsequently, the anode active material layer 12B containing an anode active material is formed on one surface of the anode current collector 12A by using a coating method or the like to form the anode 12. Subsequently, the cathode 11 is contained in the outer package can 14, and the anode 12 is contained in the outer package cup 15. Finally, the outer package can 14 and the outer package cup 15 are swaged with the separator 13 impregnated with the foregoing electrolyte and the gasket 16. Thereby, the secondary battery is completed.

### [Function and Effect of Secondary Battery]

According to the secondary battery, since the separator 13 is impregnated with the foregoing electrolyte, progression temperature of a precipitation-dissolution reaction of aluminum is lowered. Therefore, aluminum is effectively precipitated and dissolved electrochemically even at temperature that is not high. Accordingly, battery capacity is obtainable stably by the precipitation-dissolution reaction of aluminum at ambient temperature. Other functions and other effects are similar to those of the electrolyte.

### Examples

Next, Examples of the present invention will be described in detail.

### [Examples 1 to 18]

A low polarity solvent (toluene: TOL) and an alkyl sulfone (ethyl-n-propyl sulfone: ENPS) were mixed. Thereafter, an aluminum salt (aluminum chloride: AlCl₃) was dispersed to prepare liquid electrolytes (electrolytic solutions). In this case, the mixture ratio of the foregoing three components was adjusted so that compositions illustrated in Table 1, that is, contents of the low polarity solvent and mol ratios (the content of the aluminum salt/the content of the alkyl sulfone) illustrated in Table 1 were obtained. When the electrochemical characteristics of the electrolytic solutions were examined, results illustrated in Table 1 were obtained. In Table 1, as content values of the respective components, values rounded to two places of decimals are shown.

As the electrochemical characteristics, first, progression degrees of precipitation-dissolution reactions of aluminum were evaluated by using each electrolytic solution (2 cm³). Specifically, a current flowing at the time of an oxidation-reduction reaction of aluminum was measured by using a cyclic voltammetry (three-electrode method cell) in the air (25 deg C) and in a constant-temperature bath (60 deg C). In this case, a side-derivatized molybdenum electrode (diameter: 1.5 mm) available from BAS Inc. was used as a working electrode, and an aluminum wire (diameter: 1.0 mm) available from Nilaco Corporation was used as a reference electrode and a counter electrode. Further, the sweep rate was 10 mV/s. The electric potential (V) of the working electrode with respect to the electric potential (V) of the reference electrode was changed in the range from -1.0 V to +1.7 V (mol ratio: 5/3 or less) both inclusive, and in the range from -1.0 V to +1.0 V (mol ratio: 7/3). Based on the measurement results, in the case where both current densities (mA/cm²) at the time of an oxidation reaction and at the time of a reduction reaction of aluminum were equal to or larger than 3 mA/cm², it was evaluated as "white circle (○)", and in the case where both current densities (mA/cm²) at the time of an oxidation reaction and at the time of a reduction reaction of aluminum were less than 3 mA/cm², it was evaluated as "cross (×)".

**[Table 1]**

| Table 1 | Composition | | | | | | | Evaluation | |
|---|---|---|---|---|---|---|---|---|---|
| | Low polarity solvent | | Aluminum salt | | Alkyl sulfone | | mol ratio | 25 deg C | 60 deg C |
| | Type | Content (mol%) | Type | Content (mol%) | Type | Content (mol%) | | | |
| Example 1 | TOL | 56.26 | AlCl₃ | 19.44 | ENPS | 24.30 | 4/5 | ○ | ○ |
| Example 2 | | 59.14 | | 20.43 | | 20.43 | 4/4 | ○ | ○ |
| Example 3 | | 74.32 | | 12.84 | | 12.84 | 4/4 | ○ | ○ |
| Example 4 | | 30.00 | | 40.00 | | 30.00 | 4/3 | ○ | ○ |
| Example 5 | | 45.26 | | 31.28 | | 23.46 | 4/3 | ○ | ○ |
| Example 6 | | 62.32 | | 21.53 | | 16.15 | 4/3 | ○ | ○ |
| Example 7 | | 76.78 | | 13.27 | | 9.95 | 4/3 | ○ | ○ |
| Example 8 | | 47.49 | | 32.82 | | 19.69 | 5/3 | ○ | ○ |
| Example 9 | | 64.40 | | 22.25 | | 13.35 | 5/3 | ○ | ○ |
| Example 10 | | 78.35 | | 13.53 | | 8.12 | 5/3 | ○ | ○ |
| Example 11 | | 84.00 | | 10.00 | | 6.00 | 5/3 | ○ | ○ |
| Example 12 | | 88.00 | | 7.50 | | 4.50 | 5/3 | × | ○ |
| Example 13 | | 50.33 | | 34.77 | | 14.90 | 7/3 | × | ○ |
| Example 14 | | 66.96 | | 23.13 | | 9.91 | 7/3 | × | ○ |
| Example 15 | | 80.20 | | 13.86 | | 5.94 | 7/3 | × | ○ |
| Example 16 | | 26.88 | | 18.58 | | 54.54 | 1/3 | × | ○ |
| Example 17 | | 26.78 | | 37.00 | | 36.22 | 1/1 | × | ○ |
| Example 18 | | 26.67 | | 55.29 | | 18.04 | 3/1 | × | ○ |

In the case where the electrolyte contained the alkyl sulfone and the low polarity solvent together with the aluminum salt, when the content of the low polarity solvent and the mol ratio were in the appropriate ranges, an oxidation-reduction reaction of aluminum was progressed smoothly and sufficiently in the vicinity of -1.0 V and +1.0 V not only under high temperature conditions (60 deg C), but also under ambient temperature conditions (25 deg C). Thereby, a sufficient amount of current flowed both at the time of an oxidation reaction and at the time of a reduction reaction. With regard to the appropriate ranges, the content of the low polarity solvent was equal to or larger than 30 mol% and less than 88 mol%; and the mol ratio was equal to or larger than 4/5 and less than 7/3.

On the other hand, in the case where the content of the low polarity solvent and the mol ratio were out of the foregoing appropriate ranges, under high temperature conditions, an oxidation-reduction reaction of aluminum was progressed and therefore a sufficient amount of current flowed. In contrast, in the case where the content of the low polarity solvent and the mol ratio were out of the appropriate ranges, under ambient temperature conditions, an oxidation-reduction reaction of aluminum was less likely to be progressed, and therefore, almost no current flowed.

The foregoing results showed the following fact. In the case where the electrolyte contains the alkyl sulfone and the low polarity solvent together with the aluminum salt, when the contents of the foregoing three components (mol ratio) are appropriate, a specific advantage that an oxidation-reduction reaction of the aluminum salt is easily progressed without high temperature conditions is obtainable. Therefore, only by setting the contents of the foregoing three components appropriately, a more sufficient electric charge is obtained by a precipitation-dissolution reaction of aluminum even at ambient temperature.

### [Examples 19 to 28]

As shown in Table 2, electrolytic solutions were prepared and the electrochemical characteristics thereof were examined by a procedure similar to that of Example 6 except that types of the low polarity solvent and alkyl sulfone were changed. In this case, as low polarity solvents, benzene (BEZ), o-xylene (OXY), m-xylene (MXY), p-xylene (PXY), and 1-methyl naphthalene (MN) were used. Further, as alkyl sulfones, ethyl-i-propyl sulfone (EIPS), ethyl-n-butyl sulfone (ENBS), ethyl-i-butyl sulfone (EIBS), ethyl-s-butyl sulfone (ESBS), and di-n-propyl sulfone (DNPS) were used.

**[Table 2]**

| Table 2 | Composition | | | | | | | Evaluation | |
|---|---|---|---|---|---|---|---|---|---|
| | Low polarity solvent | | Aluminum salt | | Alkyl sulfone | | mol ratio | 25 deg C | 60 deg C |
| | Type | Content (mol%) | Type | Content (mol%) | Type | Content (mol%) | | | |
| Example 6 | TOL | 62.32 | AlCl₃ | 21.53 | ENPS | 16.15 | 4/3 | ○ | ○ |
| Example 19 | | | | | EIPS | | | ○ | ○ |
| Example 20 | | | | | ENBS | | | ○ | ○ |
| Example 21 | | | | | EIBS | | | ○ | ○ |
| Example 22 | | | | | ESBS | | | ○ | ○ |
| Example 23 | | | | | DNPS | | | ○ | ○ |
| Example 24 | BEZ | 62.32 | AlCl₃ | 21.53 | ENPS | 16.15 | 4/3 | ○ | ○ |
| Example 25 | OXY | | | | | | | ○ | ○ |
| Example 26 | MXY | | | | | | | ○ | ○ |
| Example 27 | PXY | | | | | | | ○ | ○ |
| Example 28 | MN | | | | | | | ○ | ○ |

Even if the types of the low polarity solvent and the alkyl sulfone were changed, a sufficient amount of current flowed at the time of an oxidation reaction and at the time of a reduction reaction of aluminum not only under high temperature conditions (60 deg C), but also under ambient temperature conditions (25 deg C).

From the foregoing results of Table 1 and Table 2, the following fact was confirmed. That is, since the electrolyte of the present invention contains the alkyl sulfone and the low polarity solvent together with the aluminum salt, and the content of the low polarity solvent and the mol ratio (the content of the aluminum salt/the content of the alkyl sulfone) are in the appropriate ranges, a precipitation-dissolution reaction of aluminum is smoothly and sufficiently progressed even at ambient temperature (25 deg C). Thereby, in a secondary battery using the electrolyte according to the present invention, a battery capacity is stably obtained by a precipitation-dissolution reaction of aluminum at ambient temperature.

The present invention has been described with reference to the embodiment and Examples. However, the present invention is not limited to the aspects described in the embodiment and Examples, and various modifications may be made. For example, the electrolyte of the present invention is applicable not only to the secondary battery but also to other electrochemical device such as a capacitor.

Further, in the embodiment and Examples, with regard to the content of the solvent (specific dielectric constant of 20 or less), the description has been given of the appropriate range derived from the results of Examples. However, the description does not totally deny a possibility that the content is out of the foregoing range. That is, the foregoing appropriate range is the range particularly preferable for obtaining the effects of the present invention. Therefore, as long as the effects of the present invention are obtained, the content may be out of the foregoing range in some degrees. The same is similarly applicable to the mol ratio (the content of the aluminum salt/the content of the alkyl sulfone) and the specific dielectric constant of the solvent.

## Claims

1. Use of an electrolyte comprising:
an aluminum salt;
an alkyl sulfone (R1-S(=O)₂-R2: each of R1 and R2 represents an alkyl group); and
a solvent having a specific dielectric constant of 20 or less, wherein the solvent is an aromatic hydrocarbon, wherein
a content of the solvent is equal to or larger than 30 mol percent and is less than 88 mol percent, and
a mol ratio between the aluminum salt and the alkyl sulfone (a content of the aluminum salt/a content of the alkyl sulfone) is equal to or larger than 4/5 and is less than 7/3 for decreasing the progression temperature of a precipitation-dissolution reaction of aluminum to below 50°C.

2. Use according to claim 1, wherein
the content of the solvent is from 30 mol percent to 84 mol percent both inclusive, and
the mol ratio between the aluminum salt and the alkyl sulfone is from 4/5 to 5/3 both inclusive.

3. Use according to claim 1, wherein the specific dielectric constant of the solvent is equal to or less than 10.

4. Use according to claim 1, wherein the aromatic hydrocarbon is one of benzene, toluene, ethylbenzene, o-xylene, m-xylene, p-xylene, and 1-methyl naphthalene.

5. Use according to claim 1, wherein each of carbon numbers of the R1 and the R2 in the alkyl sulfone is equal to or less than 4.

6. Use according to claim 1, wherein the alkyl sulfone is one of ethyl-n-propyl sulfone, ethyl-i-propyl sulfone, ethyl-n-butyl sulfone, ethyl-3-butyl sulfone, ethyl-s-butyl sulfone, and di-n-propyl sulfone.

## Patentansprüche

1. Verwendung eines Elektrolyten umfassend:
ein Aluminiumsalz;
ein Alkylsulfon (R1-S(=O)₂-R2: jedes von R1 und R2 stellt eine Alkylgruppe dar);
und
ein Lösungsmittel mit einer spezifischen Dielektrizitätskonstante von 20 oder weniger, wobei das Lösungsmittel ein aromatischer Kohlenwasserstoff ist, wobei
der Gehalt an dem Lösungsmittel gleich oder größer als 30 mol-Prozent und kleiner als 88 mol-Prozent ist und
das Molverhältnis zwischen dem Aluminiumsalz und dem Alkylsulfon (Gehalt an dem Aluminiumsalz/Gehalt an dem Alkylsulfon) gleich oder größer als 4/5 und kleiner als 7/3 ist, zum Senken der Progressionstemperatur einer Präzipitations-Auflösungs-Reaktion von Aluminium auf unter 50 °C.

2. Verwendung gemäß Anspruch 1, wobei
der Gehalt an dem Lösungsmittel von 30 mol-Prozent bis 84 mol-Prozent, jeweils inclusive, beträgt und
das Molverhältnis zwischen dem Aluminiumsalz und dem Alkylsulfon von 4/5 bis 5/3 beträgt, jeweils inclusive.

3. Verwendung gemäß Anspruch 1, wobei die spezifische Dielektrizitätskonstante des Lösungsmittels gleich oder kleiner als 10 ist.

4. Verwendung gemäß Anspruch 1, wobei der aromatische Kohlenwasserstoff eines von Benzol, Toluol, Ethylbenzol, o-Xylol, m-Xylol, p-Xylol und 1-Methylnaphthalin ist.

5. Verwendung gemäß Anspruch 1, wobei die Kohlenstoffzahlen des R1 und des R2 in dem Alkylsulfon jeweils gleich oder kleiner als 4 sind.

6. Verwendung gemäß Anspruch 1, wobei das Alkylsulfon eines von Ethyl-n-propylsulfon, Ethyl-i-propylsulfon, Ethyl-n-butylsulfon, Ethyl-i-butylsulfon, Ethyl-s-butylsulfon und Di-n-propylsulfon ist.

## Revendications

1. Utilisation d'un électrolyte, comprenant :
un sel d'aluminium ;
une alkylsulfone (R1-S(=O)₂-R2 ; chacun de R1 et R2 représente un groupe alkyle) ; et
un solvant ayant une constante diélectrique spécifique de 20 ou moins, le solvant étant un hydrocarbure aromatique, dans laquelle
une teneur en le solvant est supérieure ou égale à 30 pourcents en moles et est inférieure à 88 pourcents en moles, et
un rapport en moles entre le sel d'aluminium et l'alkylsulfone (une teneur en le sel d'aluminium, une teneur en l'alkylsulfone) est supérieur ou égal à 4/5 et est inférieur à 7/3, pour abaisser à moins de 50°C la température de progression d'une réaction de précipitation-dissolution de l'aluminium.

2. Utilisation selon la revendication 1, dans laquelle
la teneur en le solvant est de 30 pourcents en moles à 84 pourcents en moles, limites comprises, et
le rapport en moles entre le sel d'aluminium et l'alkylsulfone est de 4/5 à 5/3, limites comprises.

3. Utilisation selon la revendication 1, dans laquelle la constante diélectrique spécifique du solvant est inférieure ou égale à 10.

4. Utilisation selon la revendication 1, dans laquelle l'hydrocarbure aromatique est l'un du benzène, du toluène, de l'éthylbenzène, de l'o-xylène, du m-xylène, du p-xylène et du 1-méthylnaphtalène.

5. Utilisation selon la revendication 1, dans laquelle le nombre de carbones de chacun des radicaux R1 et R2, dans l'alkylsulfone, est inférieur ou égal à 4.

6. Utilisation selon la revendication 1, dans laquelle l'alkylsulfone est l'une de l'éthyl-n-propylsulfone, de l'éthyl-isopropylsulfone, de l'éthyl-n-butylsulfone, de l'éthyl-tert-butylsulfone, de l'éthyl-sec-butylsulfone et de la di-n-propylsulfone.
